# EUROPÄISCHE PATENTANMELDUNG

(11) **EP 1 801 469 A2**
(43) Veröffentlichungstag der Anmeldung: **27.06.2007**
(21) Anmeldenummer: 06024471.2
(22) Anmeldetag: 25.11.2006
(51) Int. Cl.: F16J 15/08

(54) **Zylinderkopfdichtung**

(30) Priorität: 13.12.2005 DE 102005059404
(71) Anmelder: ElringKlinger AG, 72581 Dettingen (DE)
(72) Erfinder: Zerfass, Hans-Rainer, Dr., 65232 Taunusstein (DE); Böhringer, Peter, 72584 Hülben (DE); Winkovic, Viktor, 65510 Idstein (DE)
(74) Vertreter: Hoeger, Stellrecht & Partner Patentanwälte

(57) **Zusammenfassung**

Zylinderkopfdichtung mit einer wenigstens eine Metallblechlage aufweisenden Dichtungsplatte (10) und die Brennraumöffnungen (12,14,16) umschließenden metallischen Brennraum-Abdichtelementen sowie der Verminderung von Verzügen des Zylinderkopfs und/oder des Motorblocks dienenden, im Abstand von den Brennraum-Abdichtelementen angeordneten Schraubenkraft-Abstützvorrichtungen; um eine solche Zylinderkopfdichtung einfach und mit möglichst geringem Werkzeugaufwand herstellen zu können, werden die Schraubenkraft-Abstützvorrichtungen (60) als auf der mindestens einen Metallblechlage angebrachte Auflagen ausgebildet, welche ein temperaturbeständiges elastomeres Bindemittel und einen so hohen Anteil an Füllstoffpartikeln aufweisen, dass das Gewichtsverhältnis von Bindemittel zu Füllstoffpartikein mindestens 1:2 beträgt.

## Beschreibung

Die Erfindung betrifft Zylinderkopfdichtungen, und zwar im wesentlichen metallische Zylinderkopfdichtungen, welche eine Dichtungsplatte aufweisen, deren Hauptbestandteil eine Metallblechlage oder mehrere aufeinandergeschichtete Metallblechlagen ist bzw. sind. Insbesondere befasst sich die Erfindung mit Zylinderkopfdichtungen für Mehrzylindermotoren; soweit solche Motoren nicht für jeden einzelnen Zylinder eine separate Zylinderkopfdichtung aufweisen, besitzt die Zylinderkopfdichtung eine längliche Dichtungsplatte mit mehreren Brennraumöffnungen, die in einer Reihe hintereinander angeordnet sind, deren Zentren aber auch auf einer sich in Längsrichtung der Dichtungsplatte erstreckenden Zickzacklinie liegen können.

Die hinsichtlich der Abdichtwirkung kritischsten Stellen einer Zylinderkopfdichtung sind die die Brennraumöffnungen umschließenden Bereiche, da dort gegen die höchsten Drücke (Brenngasdrücke) abgedichtet werden muss. Eine Zylinderkopfdichtung ist deshalb üblicherweise so gestaltet, dass, in Richtung senkrecht zur Dichtungsplatte gemessen, die Dicke der Dichtungsplatte bzw. der Elemente der Dichtungsplatte um die Brennraumöffnungen herum besonders groß ist (sogenannte Brennraumüberhöhung), um bei mittels Zylinderkopfschrauben zwischen Zylinderkopf und Motorblock eingespannter Zylinderkopfdichtung um die Brennraumöffnungen herum besonders hohe Pressungskräfte zu erzielen. Vor allem aufgrund der Leichtbauweise von Zylinderkopf und Motorblock moderner Motoren kann diese Brennraumüberhöhung zu Verzügen der Motorbauteile führen, d. h. im Zylinderkopf, unter Umständen aber auch im Motorblock und/oder in den Zylinderlaufbuchsen (soweit der Motor solche aufweist). Diese Verzüge sind aufgrund der üblichen Verteilung der Zylinderkopfschrauben über die Zylinderkopfdichtung besonders hoch in denjenigen Bereichen der Motorbauteile, zwischen denen die Längsendbereiche der Zylinderkopfdichtung eingespannt sind, ein Effekt, der noch dadurch verstärkt wird, dass die hohen, in den Brennräumen entstehenden Brenngasdrücke tendenziell bewirken, dass der Zylinderkopf zwischen seinen Längsenden aufgewölbt (weg vom Motorblock), d. h. durchgebogen wird. Nur der Vollständigkeit halber sei darauf hingewiesen, dass diese Phänomene grundsätzlich auch bei einem Einzylindermotor auftreten, bei dem der Zylinderkopf mit dem Motorblock über vier Zylinderkopfschrauben verbunden ist, welche die Zylinderkopfdichtung in der Nähe ihrer vier Ecken durchsetzen, so dass die Zylinderkopfschrauben paarweise zwei einander gegenüberliegenden Seiten des Motors benachbart angeordnet sind.

Bei Zylinderkopfdichtungen der eingangs erwähnten Art für moderne Motoren, d. h. bei metallischen Zylinderkopfdichtungen, hat die um eine Brennraumöffnung herum vorgesehene Abdichtvorrichtung meist die Gestalt einer oder mehrerer, in eine oder mehrere Metallblechlagen eingeprägten Sicke bzw. Sicken mit federelastischen Eigenschaften, wobei die Sicke eine sogenannte Vollsicke (mit einem ungefähr kreisbogenförmigen Querschnitt) oder eine sogenannte Halbsicke sein kann, deren Querschnitt ungefähr stufenförmig ist. Da eine solche Abdichtsicke im Motorbetrieb ihre federelastischen Eigenschaften beibehalten muss, um ihre Abdichtfunktion erfüllen zu können, darf sie beim Anziehen der Zylinderkopfschrauben, d. h. bei der Montage der Zylinderkopfdichtung, und im Motorbetrieb nicht übermäßig abgeflacht werden; zu diesem Zweck weisen bekannte Zylinderkopfdichtungen der in Rede stehenden Art neben der eine Brennraumöffnung umschließenden Abdichtsicke eine Verformungsbegrenzungsvorrichtung auf, die üblicherweise als Stopper bezeichnet wird. In einer Draufsicht auf die Zylinderkopfdichtung liegt ein Stopper entweder zwischen der Brennraumöffnung und der Abdichtsicke oder auf der von der Brennraumöffnung abgewandten Seite der Abdichtsicke neben letzterer, es gibt aber auch Zylinderkopfdichtungen, bei denen auf beiden Seiten der Abdichtsicke jeweils ein Stopper vorgesehen ist. Der Stopper umschließt die Brennraumöffnung gleichfalls vollständig oder zumindest nahezu vollständig und hat eine geringere Höhe als die unbelastete Abdichtsicke, so dass sich letztere bei einer Druckbeanspruchung der Zylinderkopfdichtung nur so weit federelastisch abflachen lässt, bis der Stopper als Anschlag wirkt und eine weitere Abflachung der Abdichtsicke verhindert. Stopper haben häufig die Gestalt von auf eine Metallblechlage der Zylinderkopfdichtung aufgeschweißten Blechringen.

Um die durch die sogenannte Brennraumüberhöhung verursachten, vorstehend beschriebenen Verzüge in den Motorbauteilen zu reduzieren, hat man bei mehrlagigen metallischen Zylinderkopfdichtungen für Mehrzylindermotoren schon Abstützvorrichtungen in den Bereichen der Längsenden der Dichtungsplatte vorgesehen, durch die an bestimmten Stellen, d. h. an den Stellen der Abstützvorrichtungen, die Summe der Materialstärken der Elemente der Dichtung (senkrecht zur Ebene der Dichtungsplatte gemessen) erhöht wird. Bei einer dreilagigen metallischen Zylinderkopfdichtung mit zwei außenliegenden Blechlagen (Decklagen), welche mit die abzudichtenden Öffnungen umschließenden Abdichtsicken versehen sind, und einer zwischen den Decklagen angeordneten Trägerblechlage wurden beim Ausstanzen der letzteren mit der Trägerblechlage verbundene Blechlappen ausgestanzt und dann auf die eigentliche Trägerblechlage zurückgefaltet, so dass sich an den Orten der Blechlappen die doppelte Blechstärke ergibt. Bei einer Ausführungsform dieser dreilagigen Zylinderkopfdichtung befinden sich die dadurch geschaffenen Abstützvorrichtungen in der Nähe der Längsenden der Dichtungsplatte. Derartige, auf eine Blechlage umgelegte bzw. zurückgefaltete Blechlappen sind für den Herstellungsprozess jedoch nicht völlig unproblematisch - steht ein Blechlappen vor dem Zurückfalten über die eigentliche Peripherie der Blechlage über, hat er einen höheren Materialverbrauch zur Folge, außerdem ist der Vorgang des Zurückfaltens eines solchen Blechlappens in einem sogenannten Folgewerkzeug ein nicht in jedem Falle prozesssicherer Vorgang.

Ferner sind zur Verminderung oder Vermeidung der beschriebenen Motorbauteil-Verzüge bei metallischen Zylinderkopfdichtungen Abstützvorrichtungen bekannt, welche die Gestalt von aus einer Metallblechlage herausgeprägten Erhebungen aufweisen. Wie sich aus der DE-10 2004 012 905-A1 ergibt, können diese Erhebungen die Gestalt geprägter Abstützsicken haben, die in einer Draufsicht auf die Metallblechlage z. B. eine mäanderförmige Gestalt besitzen; alternativ können die Erhebungen von einem zweidimensionalen Muster von noppenartigen Erhebungen gebildet werden, die durch Einprägen von den Erhebungen gegenüberliegenden Vertiefungen gewonnen wurden. Bei allen diesen durch Prägen hergestellten Abstützvorrichtungen hat die Praxis jedoch gezeigt, dass die für das Prägen erforderlichen Prägewerkzeuge verhältnismäßig rasch verschleißen, d. h. keine langen Standzeiten aufweisen, was im Wesentlichen darauf zurückzuführen ist, dass die verhältnismäßig filigranen Geometrien dieser bekannten Abstützvorrichtungen entsprechend filigrane Prägewerkzeuge bedingen, die beim Prägen verhältnismäßig großen Kräften ausgesetzt werden.

Schließlich ist es bei metallischen Zylinderkopfdichtungen auch schon bekannt, als der Verminderung der Motorbauteil-Verzüge dienende Abstützvorrichtungen aus einem Metallblech ausgestanzte Auflagen zu verwenden, welche auf einer Metallblechlage der Zylinderkopfdichtung z. B. durch Punktschweißen befestigt werden. Dies bedingt nicht nur einen zusätzlichen Stanzvorgang, sondern hat auch zur Folge, dass sich beim Ausstanzen dieser Auflagen eine erhebliche Abfallmenge des für die Auflagen verwendeten Metallblechs ergibt.

Allen diesen vorstehend geschilderten bekannten metallischen Zylinderkopfdichtungen ist das Merkmal gemeinsam, dass sowohl das der Abdichtung um eine Brennraumöffnung herum dienende Brennraum-Abdichtelement, als auch die Abstützvorrichtungen aus einem Metallblech durch Prägen bzw. Stanzen gewonnen werden.

Der Erfindung lag nun die Aufgabe zugrunde, eine der Verminderung der Motorbauteil-Verzüge dienende Abstützvorrichtung für zumindest im wesentlichen metallische Zylinderkopfdichtungen zu schaffen, welche sich mit bei den Herstellern von metallischen Zylinderkopfdichtungen ohnehin vorhandenen Produktionsmitteln leicht erzeugen lässt und nicht die Nachteile der vorstehend geschilderten bekannten Abstützvorrichtungen aufweist.

Ausgehend von einer Zylinderkopfdichtung mit einer Dichtungsplatte, die wenigstens eine Metallblechlage und wenigstens eine Brennraumöffnung aufweist, welche von einer mindestens ein metallisches Brennraum-Abdichtelement aufweisenden Brennraum-Abdichtvorrichtung umschlossen wird, wobei zur Verminderung von Verzügen eines Zylinderkopfs und/oder eines Motorblocks, zwischen denen die Zylinderkopfdichtung mittels Zylinderkopfschrauben einzuspannen ist, die Dichtungsplatte im Abstand von der bezüglich der Brennraumöffnung radial äußeren Seite der Brennraum-Abdichtvorrichtung mindestens eine Abstützvorrichtung zur Aufnahme von bei eingebauter Zylinderkopfdichtung auf diese einwirkenden, senkrecht zur Dichtungsplatte verlaufenden Einspannkräften aufweist, lässt sich diese Aufgabe erfindungsgemäß dadurch lösen, dass die Abstützvorrichtung als auf der mindestens einen Metallblechlage angebrachte Auflage ausgebildet ist, welche ein temperaturbeständiges elastomeres Bindemittel und Füllstoffpartikel in einem Gewichtsverhältnis von mindestens 1:2 enthält.

Der erfindungsgemäßen Lösung liegen folgende Überlegungen zugrunde: Bei der Herstellung von Zylinderkopfdichtungen werden häufig im Siebdruckverfahren elastomere Dichtraupen, z. B. aus einem Silikonkautschuk, auf Metallblechlagen der Zylinderkopfdichtungen aufgebracht, und die erfindungsgemäßen Auflagen aus einem elastomeren Bindemittel und Füllstoffpartikeln lassen sich gleichfalls ohne weiteres im Siebdruckverfahren erzeugen, d. h. mit einer den Herstellern von Zylinderkopfdichtungen geläufigen und bei diesen verfügbaren Technologie. Ferner liegen die der Verminderung der Motorbauteil-Verzüge dienenden Auflagen in Bereichen einer Zylinderkopfdichtung, die im Motorbetrieb weit geringeren Temperaturen ausgesetzt sind als die die Brennraumöffnungen umgebenden Bereiche der Zylinderkopfdichtung, nämlich Temperaturen, die nur in der Größenordnung von ca. 100°C oder höchstens 150°C liegen - dies gilt vor allem für die peripheren Bereiche einer Zylinderkopfdichtung, denen benachbart ohne Abstützvorrichtungen sonst die größten Motorbauteil-Verzüge, vor allem am Zylinderkopf, auftreten. Verhältnismäßig niedere Temperaturen herrschen aber auch in der Nachbarschaft der meisten, dem Durchtritt der Zylinderkopfschrauben dienenden Schraubenlöcher einer Zylinderkopfdichtung, was deshalb von Bedeutung ist, weil es auch zweckmäßig sein kann, in manchen Bereichen einer Zylinderkopfdichtung die von den Zylinderkopfschrauben ausgeübten Einspannkräfte in der Nachbarschaft eines oder einiger dieser Schraubenlöcher durch eine Abstützvorrichtung der Zylinderkopfdichtung aufzunehmen. Wenn also vorstehend von einem temperaturbeständigen elastomeren Bindemittel die Rede ist, sollen hierunter elastomere Bindemittel verstanden werden, welche gegenüber Temperaturen von maximal ca. 150°C beständig sind - während im Motorbetrieb im Bereich der Brennraum-Abdichtvorrichtungen einer metallischen Zylinderkopfdichtung Temperaturen in der Größenordnung von 200 bis 300°C herrschen, liegen die in den peripheren Bereichen einer metallischen Zylinderkopfdichtung herrschenden Temperaturen, wie bereits erwähnt, in der Größenordnung von ca. 100°C, und da vielen Schraubenlöchern einer metallischen Zylinderkopfdichtung vom Kühlwasser oder Motoröl durchströmte Öffnungen der Zylinderkopfdichtung benachbart sind, liegen im Motorbetrieb die Temperaturen, denen die diesen Schraubenlöchern benachbarten Bereiche der Zylinderkopfdichtung ausgesetzt sind, bei höchsten ca. 120 bis 130°C.

Die erfindungsgemäßen Abstützvorrichtungen lassen sich nicht nur einfach auf einer Metallblechlage anbringen, insbesondere im Siebdruckverfahren, sondern gerade durch die Verwendung des Siebdruckverfahrens lassen sich auch Abstützvorrichtungen nahezu beliebiger Geometrie erzeugen, insbesondere Abstützvorrichtungen, welche in einer Draufsicht auf die mit einer Abstützvorrichtung versehene Metallblechlage, ein beliebiges Breitenprofil aufweisen, aber auch Abstützvorrichtungen mit einer bereichsweise unterschiedlichen Höhe bzw. Dicke, d. h. Abstützvorrichtungen mit einem Höhenprofil.

Wie bereits erwähnt, muss durch eine Zylinderkopfdichtung um die Brennraumöffnungen der Dichtung herum gegen die höchsten Drücke abgedichtet werden; deshalb muss eine Zylinderkopfdichtung so gestaltet und dimensioniert sein, dass bei eingebauter Zylinderkopfdichtung die höchsten, auf die Zylinderkopfdichtung einwirkenden Einspanndrücke in den Bereichen der Brennraum-Abdichtvorrichtungen der Zylinderkopfdichtung auftreten. Dort, wo die der Verminderung der Motorbauteil-Verzüge dienenden Abstützvorrichtungen angeordnet sind, wirken hingegen wesentlich geringere Einspanndrücke auf die Zylinderkopfdichtung ein. Deshalb können die erfindungsgemäßen Auflagen diesen geringeren Einspanndrücken widerstehen, d. h. die Auflagen sind im Motorbetrieb druck- und standfest, und zwar wegen ihres hohen Anteils an druckbeständigen Füllstoffpartikein und trotz des elastomeren Bindemittels, welches gegenüber Bindemitteln, die zumindest keine nennenswerte Elastizität aufweisen, den Vorteil mit sich bringen, dass die Auflage trotz ihres hohen Anteils an nicht-elastischen Füllstoffpartikeln noch eine hinreichende Restelastizität aufweist, um den im Motorbetrieb auftretenden dynamischen Druckbeanspruchungen widerstehen zu können.

Der Vollständigkeit halber sei noch darauf hingewiesen, dass sich dem metallische Zylinderkopfdichtungen betreffenden Stand der Technik als Auflagen gestaltete Abstützvorrichtungen entnehmen lassen, welche - wie dies bei einem sogenannten Stopper der Fall ist - im Gegensatz zu einer erfindungsgemäßen Abstützvorrichtung Abdichtelementen von Zylinderkopfdichtungen zugeordnet sind und dem Zweck dienen, beim Einbau einer Zylinderkopfdichtung und im Motorbetrieb eine übermäßige Verformung dieser Abdichtelemente, welche Brennraumöffnungen oder Durchgangsöffnungen der Zylinderkopfdichtung für Kühlwasser oder Schmieröl umschließen, zu verhindern. So beschreibt die DE-A-195 28 031 mehrlagige metallische Zylinderkopfdichtungen mit Brennraumöffnungen, um die herum mittels in Metallblechlagen der Zylinderkopfdichtungen eingeprägter Sicken abgedichtet wird, wobei diesen Sicken Verformungsbegrenzer, d. h. sogenannte Stopper, zugeordnet sind, welche die Gestalt kreisringförmiger, die Brennraumöffnungen gleichfalls umschließender und auf Metallblechlagen der Zylinderkopfdichtungen aufgesinterter Sintermetall-Auflagen haben. Die US-A-3 794 333 beschreibt schließlich eine metallische Zylinderkopfdichtung, bei der um Kühlwasser- oder Schmieröl-Durchgangsöffnungen herum mittels ringförmiger, elastomerer Abdichtelemente abgedichtet wird, die auf eine metallische Dichtungsplatte aufgebracht sind; um beim Einbau dieser Zylinderkopfdichtung und im Motorbetrieb eine schädliche übermäßige Verformung dieser elastomeren Abdichtelemente zu verhindern, sind letzteren Verformungsbegrenzer, d. h. Stopper, zugeordnet, welche in unmittelbarer Nachbarschaft dieser elastomeren Dichtelemente angeordnet und als auf die metallische Dichtungsplatte im Siebdruckverfahren aufgebrachte Auflagen ausgebildet sind. Als für die Herstellung dieser Auflagen im Siebdruckverfahren verwendetes Material wird ein Gemisch beschrieben, welches im Wesentlichen aus einem Epoxidharz und einem demgegenüber wesentlich kleineren Anteil an mineralischen Füllstoffpartikein besteht. Da Kunstharze und vor allem Epoxidharze bekanntlich recht spröde sind, können diese Auflagen den im Motorbetrieb auftretenden dynamischen Druckbelastungen mit Sicherheit nicht über einen längeren Zeitraum hinweg widerstehen.

Bei einer erfindungsgemäßen Zylinderkopfdichtung ist es empfehlenswert, dass die der Verminderung der Motorbauteil-Verzüge dienende Abstützvorrichtung einen möglichst hohen Anteil an druckbeständigen Füllstoffpartikeln enthält, weshalb Ausführungsformen bevorzugt werden, bei denen das Gewichtsverhältnis von Bindemittel zu Füllstoffpartikeln mindestens 1:3 beträgt.

Für das elastomere Bindemittel werden im Hinblick auf die gewünschte Temperaturbeständigkeit Kautschuke empfohlen, insbesondere Fluorkautschuke, wobei ein Fluorsilikonkautschuk besonders vorteilhaft ist; geeignet ist aber auch ein hydrierter Nitrilbutadienkautschuk oder ein Acrylatkautschuk.

Grundsätzlich können für erfindungsgemäße Auflagen alle druckfesten Füilstoffpartikel verwendet werden, vor allem aus Kostengründen und im Hinblick auf ihre Temperaturbeständigkeit sind jedoch mineralische Füllstoffpartikel zu bevorzugen.

Damit das für eine erfindungsgemäße Auflage verwendete Material besonders gut an der die Auflage tragenden Metallblechlage haftet, wird ein die Haftung verbesserndes Haftmittel empfohlen, welches in dem für die Auflage verwendeten Material selbst enthalten sein kann oder mindestens in dem mit der Auflage zu versehenden Bereich der Metallblechlage auf letztere aufgetragen wird, ehe man die Auflage anbringt. Als Haftmittel besonders geeignet ist ein Aminosilan. Wenn das Haftmittel in das für die Herstellung der Auflage verwendete Material integriert ist, wird dadurch auch die Verbindung des Bindemittels mit den Füllstoffpartikeln verbessert. In diesem Zusammenhang sei noch bemerkt, dass Silan-behandelte Füllstoffe auf dem Markt verfügbar sind, so dass vor diesem Hintergrund empfohlen wird, Füllstoffpartikel zu verwenden, die mit einem Haftmittel zur Verbesserung der Haftung des Bindemittels an den Füllstoffpartikeln überzogen sind.

Aus den vorstehenden Erläuterungen ergibt sich, dass sich die vorliegende Erfindung besonders für Zylinderkopfdichtungen eignet, welche für Mehrzylindermotoren vorgesehen sind. Bevorzugte Ausführungsformen einer solchen Zylinderkopfdichtung zeichnen sich dann aus durch eine längliche Dichtungsplatte, welche zwischen ihren beiden Längsenden mehrere Brennraumöffnungen aufweist, sowie durch wenigstens zwei erfindungsgemäße Abstützvorrichtungen, die in der Nähe der Längsenden der Dichtungsplatte angeordnet sind.

Alternativ oder zusätzlich kann eine erfindungsgemäße Zylinderkopfdichtung aber auch mindestens eine Abstützvorrichtung aufweisen, die in der Nähe mindestens einer für den Durchtritt einer Zylinderkopfschraube vorgesehenen Schraubenöffnung der Dichtungsplatte angeordnet ist.

Besonders leicht und materialsparend herstellbar sind erfindungsgemäße Zylinderkopfdichtungen dann, wenn die Abstützvorrichtung die Form einer länglichen Auflage hat.

Im Hinblick auf die bereichsweise unterschiedlichen Bauteilsteifigkeiten von Motorblock und Zylinderkopf sowie die infolge der Zylinderkopfschrauben ungleichmäßige Verteilung der Einspannkräfte über die Zylinderkopfdichtung kann es empfehlenswert sein, eine erfindungsgemäße Auflage so zu gestalten, dass sie ein Höhenprofil und/oder ein Breitenprofil aufweist.

Wie bereits erwähnt, lassen sich erfindungsgemäße Auflagen besonders kostensparend im Siebdruckverfahren auf eine Metallblechlage aufbringen; in diesem Fall wird für die Herstellung der Auflagen ein viskoses Vormaterial verarbeitet, welches ein Lösungsmittel für das Bindemittel enthält und nach dem Auftragen insbesondere durch eine Wärmebehandlung ausgehärtet wird.

Weitere Merkmale, Vorteile und Einzelheiten der Erfindung ergeben sich aus der nachfolgenden Beschreibung sowie der beigefügten zeichnerischen Darstellung einiger bevorzugter Ausführungsformen der Erfindung; in der Zeichnung zeigen die
- Fig. 1: eine Draufsicht auf eine erfindungsgemäße Zylinderkopfdichtung, und die
- Fig. 2: einen Schnitt nach der Linie 2-2 in Fig. 1.

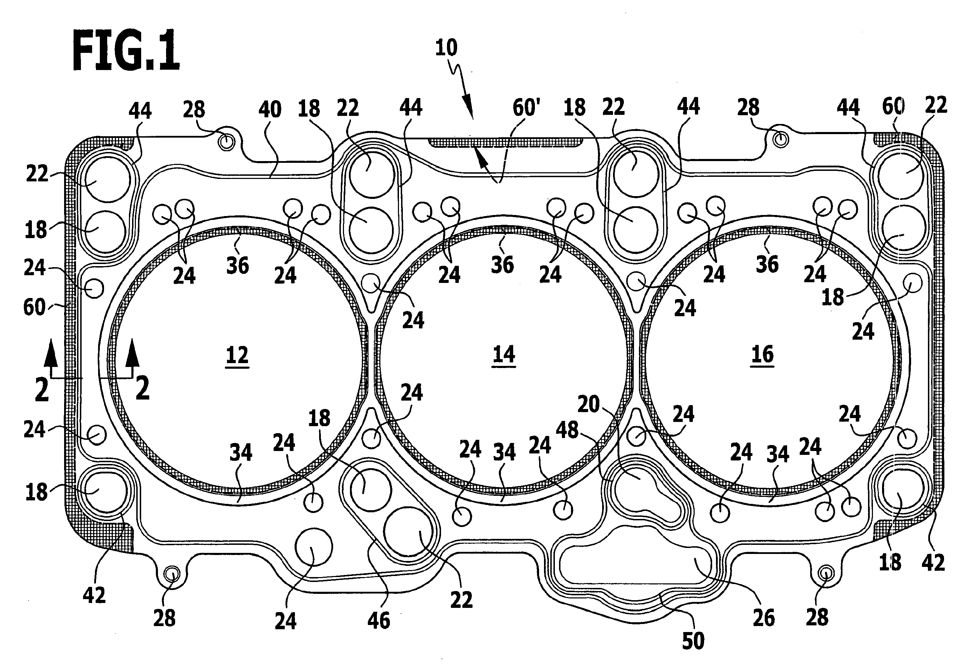

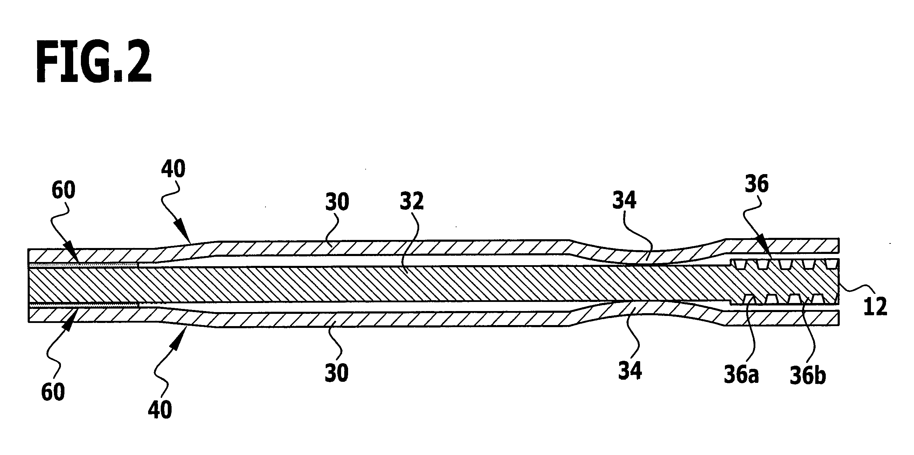

Die in Fig. 1 in einer Draufsicht dargestellte dreilagige (siehe Fig. 2) Zylinderkopfdichtung hat eine Dichtungsplatte 10 mit einer Vielzahl von Durchgangsöffnungen, nämlich drei Brennraumöffnungen 12, 14 und 16, sieben wie üblich kreisrund gestaltete Schraubenlöcher 18, eine Öffnung 20 für den Durchtritt sowohl einer Zylinderkopfschraube als auch von Schmieröl, fünf weitere kreisrunde Öffnungen 22 für den Durchtritt von Schmieröl, mehrere verschieden große Kühlwasser-Durchtrittsöffnungen 24, sowie eine Ölrücklauföffnung 26 für den Rücklauf von Schmieröl aus dem Zylinderkopf in den Motorblock. Mit 28 sind Hohlniete bezeichnet, mit denen die drei Metallblechlagen der Zylinderkopfdichtung miteinander verbunden wurden.

Wie die Fig. 1 in Verbindung mit Fig. 2 erkennen lässt, setzt sich die Dichtungsplatte 10 aus zwei Deckblechlagen 30 und einer dazwischen angeordneten Trägerblechlage 32 zusammen. Die Deckblechlagen bestehen aus Federstahlblech, während die Trägerblechlage aus einem durch Fließpressen plastisch verformbaren Stahlblech hergestellt wurde, welches allerdings gehärtet worden sein könnte, nachdem die Trägerblechlage 32 ihre endgültige Form erhielt. Jede der Deckblechlagen 30 besitzt für jede der Brennraumöffnungen 12, 14 und 16 eine federelastische, in Richtung auf die Trägerblechlage 32 vorspringende Abdichtsicke 34, welche als sogenannte Vollsicke ausgebildet ist, wobei sich die beiden einer Brennraumöffnung zugeordneten Abdichtsicken gegenüberliegen. Damit beim Einspannen der Zylinderkopfdichtung und im Motorbetrieb die Abdichtsicken 34 nicht in unzulässig hohem Maß abgeflacht werden können, ist das Trägerblech 32 um jede Brennraumöffnung herum und insbesondere unmittelbar an diese angrenzend mit einem Stopper 36 versehen, welcher einen verdickten Bereich der Trägerblechlage 32 bildet, wobei sich dieser Bereich in Form eines ringförmigen Bandes um die betreffende Brennraumöffnung herum erstreckt. Bei der dargestellten Ausführungsform ragt der Stopper 36 über beide Hauptoberflächen der Trägerblechlage 32 hinaus und wird von einem zweidimensionalen Muster aus fließgepressten napfartigen Vertiefungen 36a und Erhebungen 36b gebildet, wobei diese Erhebungen durch beim Einprägen der Vertiefungen verdrängtes Material der Blechlage gebildet werden und jeder Vertiefung 36a auf der anderen Seite der Trägerblechlage 32 eine Erhebung 36b direkt gegenüberliegt. Wie aus Fig. 2 deutlich wird, können die Abdichtsicken 34 also nur so weit abgeflacht werden, bis die jeweilige Deckblechlage 30 auf dem Stopper 36 aufliegt.

Alle Wasserlöcher 24 werden von in den Deckblechlagen 30 ausgebildeten Abdichtsicken 40 umschlossen, von denen jede in der Nähe der Peripherie der Dichtungsplatte 10 einen in sich geschlossenen Linienzug bildet und die Gestalt einer Halbsicke hat, wie sich dies aus Fig. 2 ergibt. Die Wasserlöcher 24 befinden sich also zwischen den Abdichtsicken 40 und den Abdichtsicken 34, zu denen der Vollständigkeit wegen zu bemerken ist, dass in den schmalen Stegbereichen zwischen zwei einander benachbarten Brennraumöffnungen 12, 14 bzw. 14, 16 die die eine Brennraumöffnung umfassende Abdichtsicke 34 in die die andere Brennraumöffnung umfassende Abdichtsicke 34 übergeht, so dass sich in einem solchen Stegbereich in jeder der Deckblechlagen 30 nur noch eine einzige Abdichtsicke 34 befindet.

Um die in den beiden gemäß Fig. 1 unteren Ecken der Dichtungsplatte 10 liegenden Schraubenlöcher 18 herum verläuft gleichfalls eine als Halbsicke ausgebildete Abdichtsicke 42 in jeder der beiden Deckblechlagen 30, so wie sich dies aus Fig. 1 ergibt. Weitere, als Halbsicken ausgebildete Abdichtsicken 44, 46, 48 und 50 in jeder der Deckblechlagen 30 umschließen jeweils ein Paar von von einem Schraubenloch 18 und einer Schmieröl-Durchgangsöffnung 22 gebildeten Öffnungen bzw. die Durchgangsöffnung 20 für eine Zylinderkopfschraube und Schmieröl bzw. die Ölrücklauföffnung 26 sowie die Abdichtsicke 48.

Wie aus Fig. 1 ersichtlich, weist die Zylinderkopfdichtung an den beiden Längsenden der Dichtungsplatte erfindungsgemäße Abstützvorrichtungen 60 auf, wobei sich ausweislich der Fig. 2 jeweils zwei, auf der Trägerblechlage 32 angebrachte, zur Mittelebene der Trägerblechlage insbesondere spiegelsymmetrisch ausgebildete Abstützvorrichtungen 60 gegenüberliegen. Jede dieser Abstützvorrichtungen wird von einer erfindungsgemäßen Auflage gebildet, welche im Siebdruckverfahren auf die Trägerblechlage 32 aufgebracht wurde.

Wie die Fig. 1 zeigt, kann eine erfindungsgemäße Zylinderkopfdichtung auch noch an anderen Stellen als ihren beiden Längsenden eine Abstützvorrichtung 60' in Form einer erfindungsgemäßen Auflage aufweisen, wenn dies aufgrund der Motorenkonstruktion von Vorteil sein sollte. Da diejenigen Bereiche der Dichtungsplatten 10, welche zwischen den Wasser-Abdichtsicken 40 und den Brennraum-Abdichtsicken 34 liegen, durch das Kühlwasser gekühlt werden, könnte eine Abstützvorrichtung in Form einer erfindungsgemäßen Auflage auch an einer anderen Stelle als derjenigen der Abstützvorrichtung 60' liegen, nämlich an Stellen, welche im Motorbetrieb weniger hohen Temperaturen ausgesetzt sind als die Brennraum-Abdichtsicken 34 und die diesen zugeordneten Stopper 36, also z. B. an einer Stelle, welche sowohl einem der Schraubenlöcher 18, als auch einer Schmieröl-Öffnung 22 benachbart ist.

Bei der zeichnerisch dargestellten Ausführungsform sind die Abstützvorrichtungen 60 und sollen die Abstützvorrichtungen 60' die Form von auf die Trägerblechlage 32 aufgebrachten Auflagen haben; sie könnten aber auch auf die Deckblechlagen 30 aufgebracht sein.

In Ergänzung der vorstehenden Ausführungen über die Zusammensetzung der erfindungsgemäßen Auflagen sei zunächst bemerkt, dass es vorteilhaft ist, für das im Siebdruckverfahren aufzubringende Vormaterial Elastomere mit sehr geringer Viskosität zu verwenden, um einen möglichst hohen Anteil von Füllstoffpartikeln in den erfindungsgemäßen Auflagen erzielen zu können.

Im Folgenden werden Rezepturen für besonders empfehlenswerte Vormaterialien angegeben, aus denen sich im Siebdruckverfahren erfindungsgemäße Auflagen herstellen lassen.

### Allgemeine Rezeptur

| **Bestandteil** | **Menge in Gewichtsteilen** |
|---|---|
| Fluorkautschuk (Dipolymer, ultra low viscosity) | 100 |
| Füllstoffe | 300-600 |
| Säureakzeptor | 5-40 |
| Ruß | 10-80 |
| Vernetzer für den Kautschuk | 1-8 |
| Silan (Haftungsverbesserung) | 0-8 |
| Benetzungsmittel, Verlaufmittel | 1-20 |
| Lösungsmittel für den Kautschuk | 250 - 600 |

### Bevorzugte Rezepturen

| | **Rezeptur 1** | **Rezeptur 2** Mit integriertem Haftmittel |
|---|---|---|
| **Bestandteil** | **Menge in g** | **Menge in g** |
| Fluorkautschuk (Dipolymer) | 11,3 | 11,3 |
| Füllstoff: Silbond* (SiO₂) | 41,5 | 41,5 |
| Füllstoff: Plastorit* | 3,4 | 3,4 |
| Säureakzeptor: Magnesiumoxid | 1,7 | 1,7 |
| Ruß | 3,4 | 3,4 |
| Vernetzer: Blockiertes Diamin | 0,43 | 0,18 |
| Integr. Haftmittel: Aminosilan | 0 | 0,55 |
| Additive: Benetzungsmittel, Verlaufmittel | 0,97 | 0,97 |
| Lösungsmittel: Butoxyl | 37,3 | 37,0 |

| | | |
|---|---|---|
| *) Handelsnamen mineralischer Füllstoffe | | |

Zu den vorstehenden Rezepturen ist folgendes zu bemerken:

Bei dem Säureakzeptor handelt es sich um einen basischen Zusatzstoff zur Neutralisierung von H⁺-Ionen (Protonen); durch das Verlaufmittel wird die Fließfähigkeit des im Siebdruckverfahren zu verarbeitenden Vormaterials verbessert (hierfür geeignete Substanzen sind dem Fachmann bekannt), und durch das integrierte Haftmittel wird sowohl sie Haftung des Vormaterials an der Metallblechlage, als auch die Verbindung des Bindemittels mit den Füllstoffpartikeln verbessert.

## Patentansprüche

1. Zylinderkopfdichtung mit einer Dichtungsplatte, die wenigstens eine Metallblechlage und wenigstens eine Brennraumöffnung aufweist, welche von einer mindestens ein metallisches Brennraum-Abdichtelement aufweisenden Brennraum-Abdichtvorrichtung umschlossen wird, wobei zur Verminderung von Verzügen eines Zylinderkopfs und/oder eines Motorblocks, zwischen denen die Zylinderkopfdichtung mittels Zylinderkopfschrauben einzuspannen ist, die Dichtungsplatte im Abstand von der bezüglich der Brennraumöffnung radial äußeren Seite der Brennraum-Abdichtvorrichtung mindestens eine Abstützvorrichtung zur Aufnahme von bei eingebauter Zylinderkopfdichtung auf diese einwirkenden, senkrecht zur Dichtungsplatte verlaufenden Einspannkräften aufweist, **dadurch gekennzeichnet, dass** die Abstützvorrichtung als auf der mindestens einen Metallblechlage angebrachte Auflage ausgebildet ist, welche ein temperaturbeständiges elastomeres Bindemittel und Füllstoffpartikel in einem Gewichtsverhältnis von mindestens 1:2 enthält.

2. Zylinderkopfdichtung nach Anspruch 1, **dadurch gekennzeichnet, dass** das Gewichtsverhältnis von Bindemittel zu Füllstoffpartikeln mindestens 1:3 beträgt.

3. Zylinderkopfdichtung nach Anspruch 1 oder 2, **dadurch gekennzeichnet, dass** das Bindemittel ein Kautschuk ist.

4. Zylinderkopfdichtung nach Anspruch 3, **dadurch gekennzeichnet, dass** das Bindemittel ein Fluorkautschuk, ein hydrierter Nitrilbutadienkautschuk oder ein Acrylatkautschuk ist.

5. Zylinderkopfdichtung nach Anspruch 4, **dadurch gekennzeichnet, dass** das Bindemittel ein Fluorsilikonkautschuk ist.

6. Zylinderkopfdichtung nach einem der Ansprüche 1 bis 5, **dadurch gekennzeichnet, dass** die Füllstoffpartikel mineralische Füllstoffpartikel sind.

7. Zylinderkopfdichtung nach einem der Ansprüche 1 bis 6, **dadurch gekennzeichnet, dass** die Auflage ein Haftmittel zur Verbesserung der Haftung des Bindemittels an der Metallblechlage enthält.

8. Zylinderkopfdichtung nach einem der Ansprüche 1 bis 7, **dadurch gekennzeichnet, dass** die Füllstoffpartikel mit einem Haftmittel zur Verbesserung der Haftung des Bindemittels an den Füllstoffpartikeln überzogen sind.

9. Zylinderkopfdichtung nach Anspruch 7 oder 8, **dadurch gekennzeichnet, dass** das Haftmittel ein Aminosilan ist.

10. Zylinderkopfdichtung nach einem der Ansprüche 1 bis 6, **dadurch gekennzeichnet, dass** mindestens im Bereich der Auflage auf die Metallblechlage eine Schicht aus einem die Haftung des Bindemittels an der Metallblechlage verbessernden Haftmittel aufgetragen ist.

11. Zylinderkopfdichtung nach einem der Ansprüche 1 bis 10, **gekennzeichnet durch** eine längliche Dichtungsplatte, welche zwischen ihren beiden Längsenden mehrere Brennraumöffnungen aufweist, sowie **durch** wenigstens zwei Abstützvorrichtungen, welche in der Nähe der Längsenden der Dichtungsplatte angeordnet sind.

12. Zylinderkopfdichtung nach einem der Ansprüche 1 bis 11, **dadurch gekennzeichnet, dass** die mindestens eine Abstützvorrichtung in der Nähe mindestens einer für den Durchtritt einer Zylinderkopfschraube vorgesehenen Schraubenöffnung der Dichtungsplatte angeordnet ist.

13. Zylinderkopfdichtung nach einem der Ansprüche 1 bis 12, **dadurch gekennzeichnet, dass** die Abstützvorrichtung die Form einer länglichen Auflage hat.

14. Zylinderkopfdichtung nach einem der Ansprüche 1 bis 13, **dadurch gekennzeichnet, dass** die Auflage ein Höhenprofil aufweist.

15. Zylinderkopfdichtung nach einem der Ansprüche 1 bis 14, **dadurch gekennzeichnet, dass** die Auflage ein Breitenprofil aufweist.

16. Verfahren zur Erzeugung einer Abstützvorrichtung an einer Zylinderkopfdichtung nach einem der Ansprüche 1 bis 15, **dadurch gekennzeichnet, dass** die Auflage im Siebdruckverfahren auf die Metallblechlage aufgebracht wird.

17. Verfahren nach Anspruch 16, **dadurch gekennzeichnet, dass** für die Auflage ein viskoses Vormaterial verarbeitet wird, welches ein Lösungsmittel für das Bindemittel enthält.
